Europäisches Patentamt

European Patent Office

Office européen des brevets

(19)

(11) Veröffentlichungsnummer: **0 139 339 B1**

(12) **EUROPÄISCHE PATENTSCHRIFT**

(45) Veröffentlichungstag der Patentschrift:
28.12.88

(51) Int. Cl.⁴: **C 03 B 9/193**, C 03 B 9/34, C 03 B 9/36, C 03 B 9/38

(21) Anmeldenummer: 84201533.1

(22) Anmeldetag: 24.10.84

(54) Verfahren zum Herstellen Hohler Glasgegenstände, Glasgegenstände hergestellt nach dem Verfahren und Vorrichtung zum Durchführen dieses Verfahrens.

(30) Priorität: 26.10.83 NL 8303686

(43) Veröffentlichungstag der Anmeldung:
02.05.85 Patentblatt 85/18

(45) Bekanntmachung des Hinweises auf die Patenterteilung:
28.12.88 Patentblatt 88/52

(84) Benannte Vertragsstaaten:
BE DE FR GB IT NL

(56) Entgegenhaltungen:
DD-C- 521 704
US-A- 3 184 297
US-A- 3 888 647
US-A- 4 273 568
US-A- 4 283 215

(73) Patentinhaber: N.V. Philips' Gloeilampenfabrieken,
Groenewoudseweg 1, NL-5621 BA Eindhoven (NL)

(72) Erfinder: Romberg, Hendrik, c/o INT. OCTROOIBUREAU
B.V. Prof. Holstlaan 6, NL-5656 AA Eindhoven (NL)

(74) Vertreter: Hartung, Edgar Erwin et al, INTERNATIONAAL
OCTROOIBUREAU B.V. Prof. Holstlaan 6, NL-5656 AA
Eindhoven (NL)

ACTORUM AG

## Beschreibung

Die Erfindung bezieht sich auf ein Verfahren zum Herstellen hohler Glasgegenstände gemäss dem Oberbegriff von Anspruch 1, auf hohle Glasgegenstände, insbesondere Kolben für Glühlampen gemäss den Oberbegriffen der Ansprüche 3 und 4, hergestellt nach diesem Verfahren, sowie auf eine Vorrichtung zum Durchführen des Verfahrens gemäss dem Oberbegriff des Anspruchs 5.

Ein derartiges Verfahren und eine derartige Vorrichtung sind aus der US-Patentschrift 3 184 297 bekannt. Derartige Glasgegenstände und Kolben sind aus der DE-B-3 213 444 bekannt. Das bekannte Verfahren ist insbesondere bestimmt zum Herstellen von Gegenständen mit einem relativ starken Durchmesserverlauf, beispielsweise Kolben für elektrische Glühlampen mit einem engen Hals und mit einem maximalen Durchmesser, der dem Drei- bis Vierfachen des kleinsten Durchmessers entspricht, wobei der Gegenstand fast überall eine gleiche Wandstärke aufweist. Bei diesen Gegenständen sind jedoch die Wandteile mit grösserem Durchmesser kugelförmig ausgebildet und die Übergangsteile zwischen den Wandteilen mit unterschiedlichen Durchmessern verlaufen allmählich und mit einem relativ grossen Krümmungsradius. Zum Herstellen von Gegenständen mit einem schroffen Durchmesserverlauf und mit einem relativ kleinen Krümmungsradius an den Übergangsteilen zwischen den Wandteilen mit unterschiedlichen Durchmessern ist dieses bekannte Verfahren weniger geeignet, weil an den Übergangsteilen mit einem geringen Krümmungsradius eine unzureichende Wandstärke erhalten wird.

Die vorliegende Erfindung hat nun zur Aufgabe, ein Verfahren zu schaffen, das es ermöglicht, hohle Glasgegenstände herzustellen mit einem relativ grossen und schroffen Durchmesserverlauf und mit einem verhältnismässig geringen Krümmungsradius an den Übergangsteilen zwischen den Wandteilen mit unterschiedlichen Durchmessern, wobei an den Übergangsteilen mindestens eine ausreichende wenn nicht die maximale Wandstärke erhalten wird.

Dies wird nach der Erfindung im wesentlichen dadurch erzielt, dass bei dem eingangs genannten Verfahren das Külbel in der Vorform gekühlt, durch die thermische Zwischenbehandlung am unteren Teil aufgewärmt und am oberen Teil abgekühlt wird und die Stauchbearbeitung am Bodenteil des Külbels während des Ausblasens erfolgt, derart, dass in dem Külbel eine Temperaturverteilung herbeigeführt wird mit einer von dem Halsteil zu dem Bodenteil hin zunehmenden Temperatur und dass in dem ausgeblasenen hohlen Glasgegenstand eine Wandstärkeverteilung mit einer Wandstärke am Wandteil mit der grössten Querabmessung erhalten wird, die grösser ist als die minimale Wandstärke des Glasgegenstandes.

Umfangreiche Versuche haben gezeigt, dass durch die genannten kombinierten Massnahmen schwierig herzustellende Glasgegenstände mit der genannten Geometrie auf wirtschaftliche und reproduzierbare Art und Weise mit einer Wandstärkeverteilung hergestellt werden können, die zwar nicht überall gleich ist aber an den mechanisch empfindlichsten Teilen, insbesondere an den schroffen Übergangsteilen mit einem relativ geringen Krümmungsradius eine Wandstärke aufweist, die beachtlich bis maximal ist. Unter einem relativ geringen Krümmungsradius wird dabei ein Radius in der Grössenordnung von 5 mm verstanden und zwar bei einem maximalen Durchmesser von etwa 100 mm und bei einer mittleren Wandstärke von etwa 2 mm. Das erfindungsgemässe Verfahren eignet sich insbesondere zum Herstellen von Gegenständen, wobei ein Übergangsteil mit einem schroffen Durchmesserverlauf und mit einem geringen Krümmungsradius zugleich den grössten Durchmesser aufweist.

Durch die thermische Zwischenbehandlung des Külbels wird der obere Teil gekühlt und der untere Teil aufgewärmt. Das in der Vorform gepresste Külbel hat an dem oberen Teil bereits seine endgültige Form und teilweise auch die endgültige Wandstärke erhalten, während der restliche Teil des Külbels mit einer bestimmten Wandstärkeverteilung vorgeformt ist. Wenn nun der obere Teil des freihängenden Külbels gekühlt wird, wird ein zu starkes Aushängen des Külbels an diesem Teil vermieden; der untere Teil des Külbels, der in der Endform zu grösseren Querabmessungen ausgeblasen werden muss, ist beim Pressen in der Vorform einigermassen abgekühlt; wenn nun der untere Teil des Külbels angewärmt wird, wird dieser Wärmeverlust ausgeglichen.

Eine bevorzugte Ausführungsform des erfindungsgemässen Verfahrens weist das Kennzeichen auf, dass man das Külbel bis zu einer derartigen Länge aushängen lässt, dass sich am oberen Teil des Külbels eine Einschnürung bildet und dass während des Ausblasevorganges des Külbels der aus der unten offenen Endform hängende untere Teil des Külbels durch die Stauchbearbeitung allmählich aufwärts und in die Endform gedrückt wird.

Dadurch, dass man das Külbel soweit aushängen lässt, dass am oberen Teil des Külbels eine Einschnürung auftritt, wird erreicht dass das Külbel an diesem eingeschnürten Teil die Wand der Endform beim Schliessen derselben nicht berührt; dadurch ist es möglich, Gegenstände mit einem relativ engen Hals auf reproduzierbare und störungsfreie Art und Weise herzustellen. Beim Ausblasen wird das Külbel zu grösseren Querabmessungen geblasen; dadurch, dass nun entsprechend der genannten Massnahme das Külbel gleichzeitig nach oben gedrückt wird, geht die Vergrösserung der Querabmessungen mit einer Verringerung der Länge des Külbels einher und wird auf die sich dehnenden Teile eine Stauchwirkung ausgeübt, wodurch eine sonst erfolgende Verringerung der Wandstärke vermieden wird und sogar überkompensiert werden kann. Durch die genannten Massnahmen kann das Vollblasen des Külbels zu dem endgültigen Gegenstand auf kontrollierte Weise durchgeführt werden.

Es sei bemerkt, dass es aus der bereits genannten US-Patentschrift 3 184 297 an sich bekannt ist, das Külbel zu einer relativ grossen Länge aushängen zu lassen und auf das Külbel eine Stauchbearbeitung auszuüben. Bei diesem bekannten Verfahren wird jedoch das Külbel periodisch nach oben gedrückt und gestaucht bevor die Endform geschlossen wird; dabei besteht die Gefahr, dass der obere Teil des aufgestauchten Külbels einen Durchmesser erhält, der grösser ist als der betreffende Durchmesser des Formhohlraumes der Endform, so dass Glas zwischen die beiden Endformhälften geraten kann wenn die Endform geschlossen wird. Und da das Stauchen des Külbels vor dem Ausblasen in der Endform erfolgt, kann die mit dem Ausblasen einhergehende Verringerung der Wandstärke nicht ausgeglichen werden.

Die Erfindung betrifft auch ein aus der DE-B-3 213 444 an sich bekannter hohler Glasgegenstand mit einem engen Hals, mit starken und schroffen Durchmesserübergängen und mit einem relativ geringen Krümmungsradius an den Übergangsteilen zwischen zwei Wandteilen mit unterschiedlichen Durchmessern, der, hergestellt nach dem erfindungsgemässen Verfahren, gekennzeichnet ist durch eine Wandstärke an den Übergangsteilen, die grösser ist als die minimale Wandstärke des Glasgegenstandes.

Mit dem erfindungsgemässen Verfahren lassen sich insbesondere hohle Glasgegenstände mit einem Übergangsteil, der ausser einem schroffen Durchmesserverlauf und einem geringen Krümmungsradius auch den maximalen Durchmesser aufweist, beispielsweise Kolben für Reflektorlampen vom Typ, wie in der oben bereits genannten DE-B-3 213 444 beschrieben ist, herstellen. Eine besondere Ausführungsform eines derartigen Kolbens weist ein ringförmiges sich in radialer Richtung erstreckendes Fenster auf, das winkelrecht oder nahezu winkelrecht zur Mittellinie des Kolbens steht; ein Kolben für eine derartige Reflektorlampe hergestellt nach dem erfindungsgemässen Verfahren ist dadurch gekennzeichnet, dass die Wandstärke an den Übergangsteilen grösser ist als die minimale Wandstärke des Kolbens, insbesondere die Wandstärke im Bereich des Fensters grösser ist als die Wandstärke im Bereich des Kolbenbodens.

Die Erfindung bezieht sich ebenfalls auf eine Vorrichtung zum Durchführen des Verfahrens, welche Vorrichtung eine Halsform aufweist, die aus zwei symmetrischen in radialer Richtung verschiebbaren Halsformhälften besteht, eine Vorform, die mit einem Presskolben zusammenwirkt und eine Endform, die aus zwei symmetrischen Endformhälften und einem scheibenförmigen Bodenteil besteht, wobei die Vorrichtung weiterhin eine an die Halsform anschliessbare Blaseinrichtung, eine Einrichtung zur Durchführung einer thermischen Zwischenbehandlung sowie eine unter die Endform bringbare Stauchvorrichtung aufweist, welche Vorrichtung nach der Erfindung das Kennzeichen aufweist, dass die Vorform eine Formhalterung, einen Einsatz mit einem Presshohlraum sowie einen Formboden aufweist, wobei am Aussenumfang des Einsatzes sich in axialer Richtung erstreckende Kühlrippen vorgesehen sind, die zusammen mit der Innenwand der Formhalterung Kühlkanäle einschliessen, wobei die Kühlrippen wenigstens über einen Teil ihrer Länge eine in der Richtung des Formbodens abnehmende Höhe aufweisen, wobei die Einrichtung zur Durchführung einer thermischen Zwischenbehandlung durch einen thermischen Kopf gebildet ist, der einen Kühlring und einen unter diesem Kühlring positionierten Brenner aufweist. Durch die veränderliche Höhe der Kühlrippen kann die Wärmeabfuhr des Einsatzes, die teilweise durch Wärmeleitung über die Formhalterung und teilweise durch Wärmeübertragung an die durch die Kühlkanäle strömende Kühlluft erfogt, derart beeinflusst werden, dass in dem Einsatz in axialer Richtung gesehen und beim Pressen auch über die Länge des Külbels ein bestimmtes Temperaturprofil erhalten wird und zwar eine in Richtung des Formbodens zunehmende Temperatur. Mit Hilfe des thermischen Kopfes kann das Külbel einer thermischen Zwischenbehandlung ausgesetzt werden, wobei das Külbel an einem Teil gekühlt und gleichzeitig an einem anderen Teil aufgewärmt werden kann.

Es sei bemerkt, dass bei der, aus der US-Patentschrift 4 251 253 bekannten Vorrichtung Massnahmen getroffen wurden um einen Temperaturverlauf in der Umfangsrichtung der Vorform und des Külbels herbeizuführen; diese Massnahmen bieten jedoch keine Lösung zum Erzielen eines Temperaturunterschiedes in der Längsrichtung der Formform und des Külbels.

Eine Vorform mit einem Einsatz, der mit in axialer Richtung sich erstreckenden Kühlrippen versehen ist, ist an sich aus der US-Patentschrift 4 067 711 bekannt. Die Kühlrippen stehen jedoch nicht in unmittelbarer Verbindung mit der Aussenwand des Presshohlraumes, welcher letztere in einer gesonderten Pressform untergebracht ist.

Weiterhin ist es aus der US-Patentschrift 2 928 214 an sich bekannt, in einer Vorform und in dem darin befindlichen Glaskülbel einen Temperaturverlauf in axialer Richtung herbeizuführen mittels Kühlluftöffnungen, deren Anzahl in der Längsrichtung der Vorform gesehen variiert. Die Anzahl Öffnungen nimmt jedoch in Richtung des Formbodens zu, so dass die Temperatur in Richtung des Formbodens abnimmt.

Bei einer bevorzugten Ausführungsform der erfindungsgemässen Vorrichtung sind der Einsatz und die Formhalterung aus unterschiedlichen Werkstoffen hergestellt, wobei der Werkstoff des Einsatzes einen höheren Ausdehnungskoeffizienten aufweist als der Werkstoff der Formhalterung. Durch diese Massnahme wird erreicht, dass beim Pressen durch die stärkere Ausdehnung des Einsatzes ein intensiver Kontakt der Kühlrippen auf dem Einsatz mit der Innenwand der Formhalterung erhalten wird, wodurch eine gute Wärmeübertragung gewährleistet ist und die Reproduzierbarkeit des Verfahrens auf positive Weise beeinflusst wird.

Eine weitere bevorzugte Ausführungsform der erfindungsgemässen Vorrichtung ist dadurch gekennzeichnet, dass der thermische Kopf in vertikaler Richtung bewegbar ist und der Kühlring und der Brenner relativ zueinander einstellbar sind. Durch Verschiebung des thermischen Kopfes in der Höhenrichtung und durch Einstellung des Kühlringes und des Brenners zueinander kann der Temperaturverlauf über die Länge des Külbels beeinflusst werden.

Eine andere bevorzugte Ausführungsform der erfindungsgemässen Vorrichtung weist das Kennzeichen auf, dass die Stauchvorrichtung durch den scheibenförmigen Bodenteil der Endform gebildet ist, welcher bei in Umfangsrichtung geschlossener Endform, wobei die beiden Endformhälften aneinander liegen, unabhängig von den beiden Endformhälften in der Höhenrichtung verschiebbar ist. Zu dem Zeitpunkt, zu welchem das Ausblasen des Külbels beginnt, sind die beiden Endformhälften geschlossen und bilden zusammen mit dem Bodenteil, der in der unteren Lage steht, einen offenen Formhohlraum. Während des Ausblasens des Külbels wird der Bodenteil aufwärts bewegt, wobei das Külbel aufwärts gedrückt wird, bis der Formhohlraum geschlossen ist.

Ausführungsbeispiele der Erfindung sind in der Zeichnung dargestellt und werden im folgenden näher beschrieben. Es zeigen:

Fig. 1a bis 1j: auf schematische Weise die aufeinanderfolgenden Phasen beim Herstellen eines hohlen Glasgegenstandes mit dem erfindungsgemässen Verfahren;

Fig. 2 einen Teil der Vorrichtung nach der Erfindung im Längsschnitt;

Fig. 3 die in Fig. 2 dargestellte Vorrichtung im Schnitt gemäss der Linie III–III in Fig. 2;

Fig. 4 einen anderen Teil der Vorrichtung im Längsschnitt;

Fig. 5 einen Längsschnitt durch einen weiteren Teil der Vorrichtung in zwei unterschiedlichen Stellungen;

Fig. 6 einen Teil der in Fig. 5 dargestellten Vorrichtung ebenfalls im Längsschnitt dargestellt.

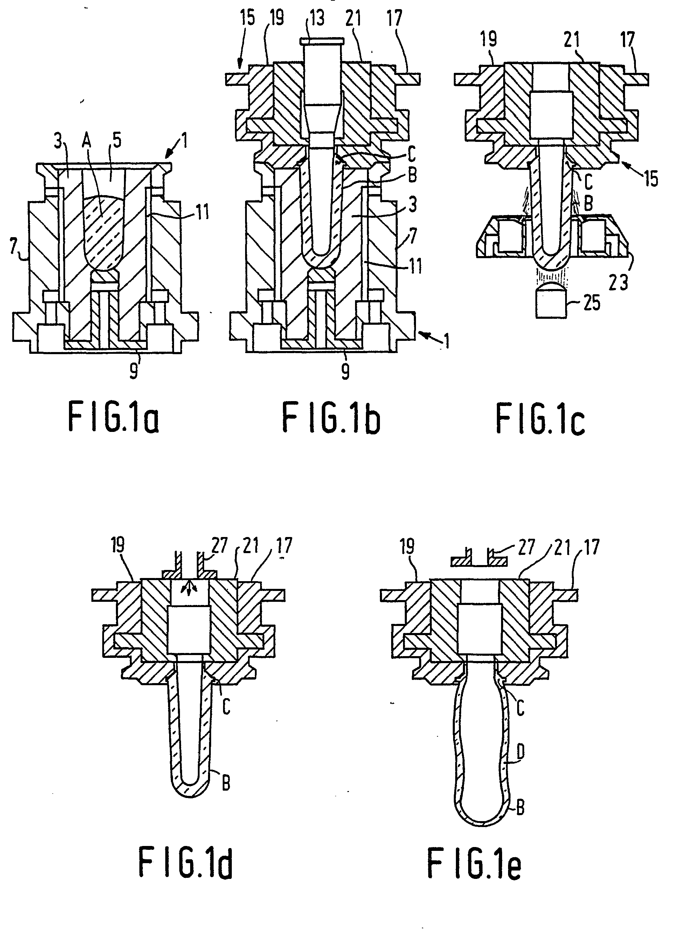

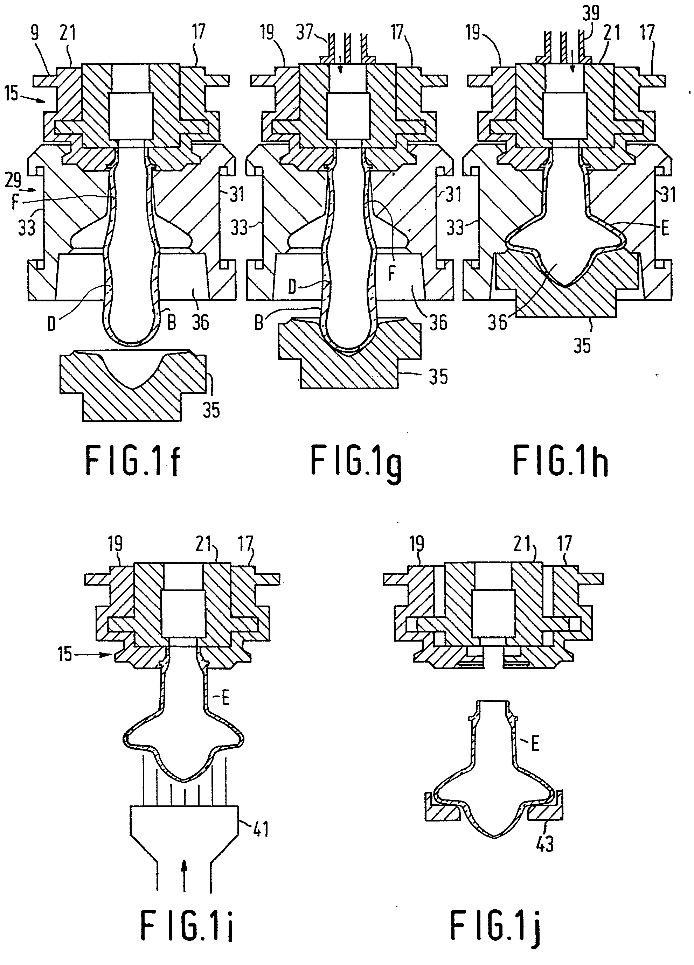

Das Verfahren nach der Erfindung wird an Hand der Fig. 1a bis 1j näher erläutert. Fig. 1a zeigt eine Vorform 1 mit einem Glasposten A, der auf herkömmliche Art und Weise mit Hilfe einer Glasschere von einem Strom geschmolzenen Glases, das aus der Ausströmungsöffnung eines Glasspeisers strömt, abgeschnitten wird und in freiem Fall in die Vorform 1 gelangt. Die noch näher zu beschreibende in der vertikalen Richtung verschiebbare Vorform 1 besteht im wesentlichen aus einem Einsatz 3, der einen Presshohlraum 5 aufweist, und der in eine Formhalterung 7 aufgenommen ist. Der Presshohlraum 5 ist auf der Bodenseite durch einen Formboden 9 abgeschlossen. Zwischen dem Aussenumfang des Einsatzes 3 und dem Innenumfang der Formhalterung 7 ist die Vorform 1 mit Kühlkanälen 11 versehen. In den nachstehend beschriebenen Prozessphasen wird der Glasposten A entsprechend dem Press-Blasverfahren zu einem hohlen Glasgegenstand mit grossen und schroffen Durchmesserunterschieden, insbesondere ein Kolben für eine Reflektorlampe gebildet. Fig. 1b zeigt die Pressphase, wobei die Vorform sich in der Pressstellung befindet und wobei der Glasposten A mit Hilfe eines vertikal verschiebbaren Presskolbens 13 zu einem länglichen Külbel B gepresst wird. In dieser Phase wird der Halsteil C bereits in die endgültige Form und zum Teil auch auf die gewünschte Wandstärke gebracht und zwar mittels einer Halsform 15, die zwei symmetrische in radialer Richtung verschiebbare Halsformhälften 17 und 19 aufweist. Die Halsform 15 wirkt mit der oberen Seite der Vorform 1 zusammen. Eine Führungsbüchse 21 dient zum Führen des Presskolbens 13. In dieser Phase wird in dem Külbel B, in der Längsrichtung desselben, ein Temperaturverlauf bewirkt und zwar derart, dass die Temperatur des Külbels in Richtung des Bodens zunimmt. In den nun folgenden Prozessphasen wird das Külbel B mit dem Halsteil C frei hängend an der geschlossenen Halsform 15, die in einer horizontalen Ebene bewegbar ist, in die aufeinanderfolgenden Positionen gebracht.

Fig. 1c zeigt das Külbel in einer Zwischenposition, wobei das Külbel freihängend an der Halsform 15 einigermassen aushängt und gleichzeitig eine thermische Zwischenbehandlung erfährt. Durch Kühlluft, die über einen Kühlring 23 zugeführt wird, wird der obere Teil des Külbels B abgekühlt, während der Bodenteil mittels eines Brenners 25 erwärmt wird. Durch diese Massnahme wird ein zu starkes Aushängen des oberen Teils vermieden, wogegen der Bodenteil, der in der Vorform einigermassen abgekühlt ist, wieder auf eine derartige Temperatur erwärmt wird, dass die gewünschte Temperaturverteilung am Külbel entlang beibehalten wird.

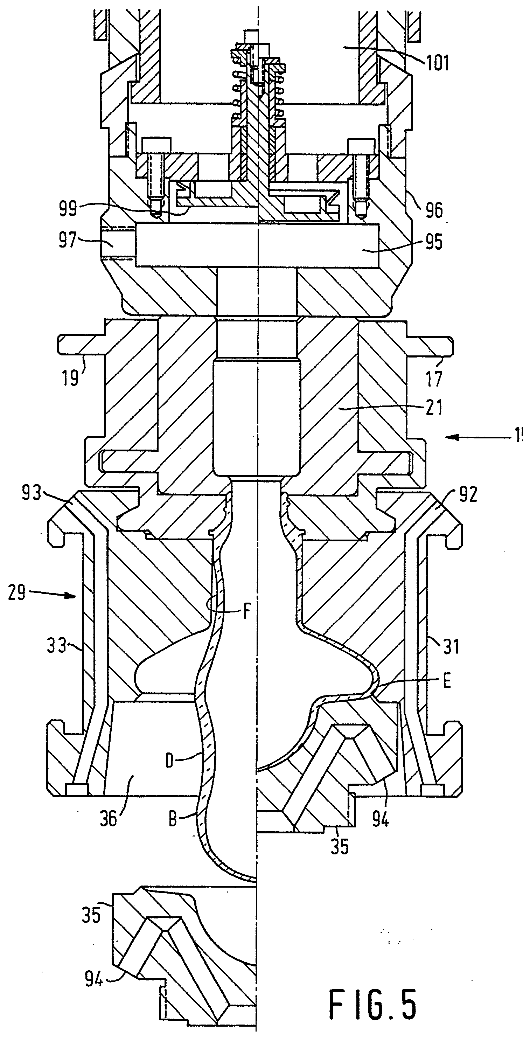

Die Fig. 1d und 1e zeigen in einem folgenden Prozessschritt das sogenannte Puffen bzw. Zwischenblasen, wobei einige Male hintereinander Luft unter leichtem Druck durch eine Luftzufuhr 27 zugeführt wird um das freihängende sich noch weiter ausziehende Külbel B wenigstens teilweise einigermassen auszublasen. Fig. 1d zeigt das Külbel in der Anfangsphase dieses Prozessschrittes, während Fig. 1e die Endphase darstellt; das sich weiter ausgezogene einigermassen ausgeblasene Külbel B weist nun eine Einschnürung D auf. Was die Wandstärkeverteilung und die Formgestaltung des Külbels B anbelangt, sei auf Fig. 5 verwiesen, die das Külbel und das erhaltene Enderzeugnis in vergrössertem Massstab darstellt.

Daraufhin wird das Külbel in eine in den Fig. 1f, 1g und 1h dargestellte Blasposition gebracht, in der das Külbel zu dem endgültigen Erzeugnis ausgeblasen wird. Dazu wirkt die Halsform 15 mit der oberen Seite einer Endform 29 zusammen, die aus zwei in radialer Richtung verschiebbaren Endformhälften 31 und 33 und einem scheibenförmigen Bodenteil 35 besteht, der in der Höhenrichtung bewegbar ist. Fig. 1f zeigt die Anfangsphase dieses Prozessschrittes, wobei die beiden gegeneinander geführten Endformhälften 31 und 33 das weiter ausgezogene freihängende Külbel an einem inzwischen eingeschnürten Teil F umschliessen und zusammen mit dem Bodenteil 35, der sich in der unteren Lage in einem gewissen Abstand von der unteren Seite der Endformhälften befindet, einen offenen Formhohlraum 36 bildet, in welchem das Külbel sich weiter ausziehen und sich weiter verlängern kann bis zu einer Länge, die die axiale Abmessung des Enderzeugnisses weit überschreitet. Fig. 1g zeigt eine erste Blasphase, wobei der Bodenteil 35 zunächst mit dem unteren Ende des Külbels B in Berührung gebracht ist und weiterhin mit konstanter Geschwindigkeit aufwärts bewegt wird, während über eine Zuführungsleitung 37 gleichzeitig Luft kontinuierlich und mit einem geringen Druck dem Innern des Külbels zugeführt wird, so dass dieses zu grösseren Querabmessungen geblasen wird. In dieser Phase geht eine Zunahme der Querabmessungen des Külbels mit einem abnehmenden Volumen des Formhohlraumes und mit einer abnehmenden Länge des Külbels einher. Das untere Ende des Külbels wird aufwärts in den Formhohlraum gedrückt und einigermassen gefaltet, wobei der erste eingeschnürte Teil F des Külbels in den Bereich des grössten Durchmessers der Endform 29 zu liegen kommt.

Fig. 1h zeigt eine zweite Blasphase, wobei der Bodenteil 35 an der Unterseite der beiden Endformhälften 31 und 33 anliegt, so dass der Formhohlraum auch auf der Unterseite geschlossen ist. In dieser Phase wird über eine weitere Zuführungsleitung 39 Luft unter erhöhtem Druck zugeführt um den letzten Endes gebildeten hohlen Glasgegenstand E in der durch den Formhohlraum auferlegten Form erstarren zu lassen.

Fig. 1i zeigt eine folgende Position, wobei der Gegenstand E freihängend an der Halsform 15 der Wirkung eines Kühlluftstromes ausgesetzt wird, welche Luft durch eine Düse 41 zugeführt wird. Fig. 1j zeigt eine letzte Position, in der die beiden Halsformhälften 17 und 19 in radialer Richtung voneinander entfernt sind und wobei der frei gewordene Gegenstand E mit Hilfe eines Trägers 43 weiter befördert werden kann. Was die Wandstärkeverteilung in dem Fertigerzeugnis anbelangt, sei auf die rechte Hälfte der Fig. 5 verwiesen, die das Erzeugnis in vergrössertem Massstab darstellt und woraus hervorgeht, dass das Erzeugnis an dem mechanisch empfindlichsten Teil, und zwar an dem Wandteil mit dem grössten Durchmesser der im Schnitt gesehen über einen relativ geringen Krümmungsradius auf schroffe Weise zu einem Teil mit einem geringeren Durchmesser übergeht, eine Wandstärke aufweist, die wesentlich grösser ist als die minimale Wandstärke an dem Bodenteil des Erzeugnisses.

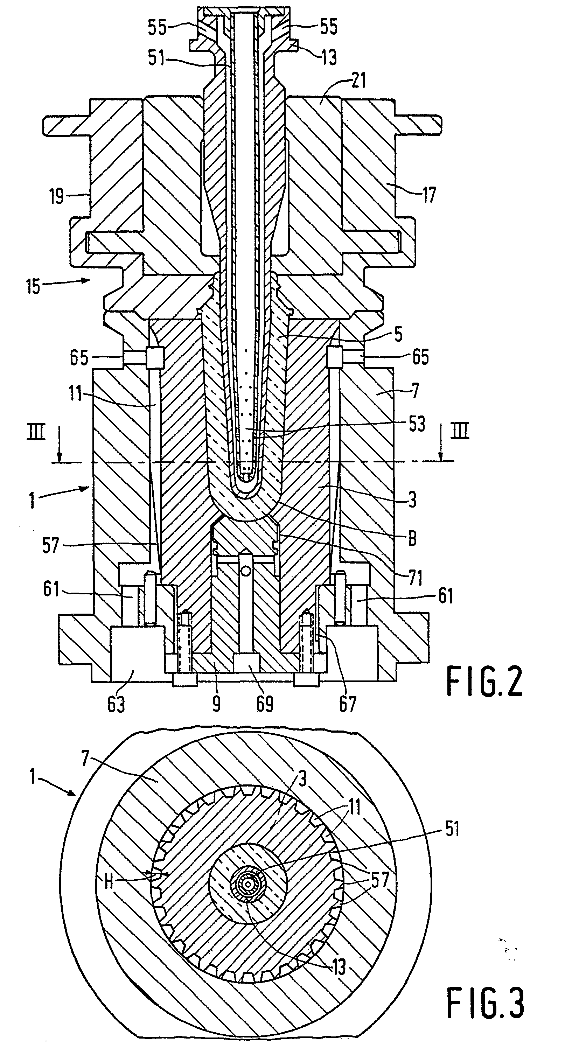

Einzelteile der Vorrichtung nach der Erfindung werden an Hand der Fig. 2 bis 6 näher erläutert. Fig. 2 und 3 zeigen im Längsschnitt bzw. im Schnitt gemäss der Linie III–III in Fig. 2 die geschlossene Vorform mit dem Einsatz 3, die zylinderförmige Formhalterung 7, den Formboden 9, den Presskolben 13 sowie die Halsform 15 mit den beiden symmetrischen Halsformhälften 17 und 19 und mit der ringförmigen Führungsbüchse 21. Der Presskolben 13 ist auf herkömmliche Weise hohl ausgebildet und mit einem Kühlrohr 51 versehen, durch das Kühlluft zugeführt wird, die durch Öffnungen 53 gegen die Innenwand des Presskolbens geblasen wird und die über Kanäle 55 den Kolben verlässt. Am Aussenumfang des Einsatzes 3 sind sich in der Längsrichtung erstreckende Kühlrippen 57 vorgesehen, die auf einem Teil ihrer Länge die Innenwand der Formhalterung 7 berühren und am restlichen Teil eine in Richtung des Formbodens abnehmende Höhe H aufweisen. Die Kühlrippen 57 schliessen zusammen mit dem Aussenumfang des Einsatzes 3 und mit dem Innenumfang der Formhalterung 7 die bereits genannten Kühlkanäle 11 ein, die durch Verbindungskanäle 61 mit einem Ringkanal 63 in Verbindung stehen. Kühlluft wird über den Ringkanal 63 und die Verbindungskanäle 61 zugeführt, strömt durch die Kühlkanäle 11 und an den Kühlrippen 57 entlang und verlässt die Formhalterung 7 durch die Öffnungen 65. Die Wirkung der Kühlrippen 57, die über einen Teil ihrer Länge eine abnehmende Höhe H aufweisen, wurde obenstehend bereits erläutert. Als Ergänzungsmassnahme zur Beeinflussung der Kühlung ist zwischen der Unterseite des Einsatzes 3 und dem Innenumfang der Formhalterung 7 ein Ringspalt 67 vorgesehen. Abhängig von der gewünschten Wärmeabfuhr können die betreffenden Teile des Einsatzes 3 und der Formhalterung 7 völlig anliegend oder durch Rippen teilweise anliegend ausgebildet werden. Ein Entlüftungskanal 69 in dem Formboden 9 der mit einem Ringspalt 71 zwischen dem Formboden und dem Einsatz in Verbindung steht, sorgt auch für eine etwaige Entlüftung des Presshohlraumes 5 beim Füllen mit Glas und für eine Belüftung des Presshohlraumes beim Entfernen des gepressten Külbels. Der Ringspalt 71 hat eine Spaltbreite von etwa 0,2 mm. Der Einsatz 3 und die Formhalterung 7 sind aus unterschiedlichen Werkstoffen mit verschiedenen Wärmeausdehnungskoeffizienten    ausgebildet. Vorzugsweise ist die Formhalterung 7 aus Stahl hergestellt mit einem Wärmeausdehnungskoeffizienten $\alpha$ entsprechend $11.10^{-6}$ während der Einsatz aus einer Al-Cu-Legierung besteht mit einem Wärmeausdehnungskoeffizienten $\alpha$ entsprechend $18.10^{-6}$. Durch die stärkere Ausdehnung des Einsatzes 3 wird beim Pressen ein intensiver Kontakt der Kühlrippen 57 mit der Innenwand der Formhalterung 7 und eine gute Wärmeübertragung erhalten, wodurch eine gute Wärmeabfuhr des Einsatzes 3 und eine gute Kühlung der Vorform gewährleistet sind. Die genannte Kombination von Werkstoffen bietet ausserdem den Vorteil einer Trennung von Funktionen: die stählerne Formhalterung sorgt für eine mechanische Festigkeit der Vorform, während der Einsatz aus einer Al-Cu-Legierung eine gute Kühlung gewährleistet. Die Al-Cu-Legierung ist ausserdem korrosionsbeständiger als Stahl.

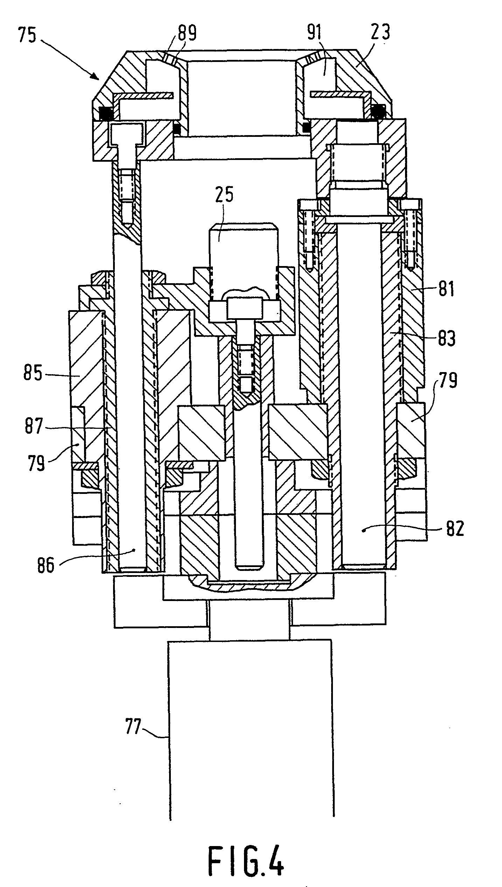

Fig. 4 zeigt im Längsschnitt einen thermischen Kopf 75 mit dem bereits genannten Kühlring 23 und dem zentral angeordneten Brenner 25. Mittels einer pneumatischen Einheit 77 und über einen Antriebsblock 79 ist der thermische Kopf in der Höhenrichtung verschiebbar. Der Kühlring 23 ist in der Höhenrichtung mittels einer Mutter 81 einstellbar, die auf einer Führung 82 gelagert ist und zusammen mit dieser Führung in axialer Richtung verschiebbar ist. Eine Innenspindel 83 ist mit der Trägerplatte 79 formschlüssig verbunden. Die Höheneinstellung des Kühlringes 23 erfolgt durch Verdrehung der Mutter 81, wodurch die Innenspindel 83 verschoben wird. Der Brennerkopf 25 ist zusammen mit einer Innenspindel 87 in axialer Richtung verschiebbar auf einer Führung 86. Die Innenspindel 87 arbeitet mit einer Mutter 85 zusammen, die in der Trägerplatte 79 drehbar gelagert ist. Die axiale Einstellung des Brennerkopfes erfolgt durch Verdrehung der Mutter 85, wodurch die Innenspindel 87 zusammen mit dem Brennerkopf 25 in axialer Richtung verschoben wird. Der Brenner 25 kann von einem herkömmlichen Typ sein. Der Kühlring 23 ist mit Luftkanälen 89 versehen, die mit einer ringförmigen Luftzufuhrkammer 91 in Verbindung stehen. Die Kühlluft für den Kühlring und das Gas für den Brenner werden über nicht dargestellte Schläuche zugeführt.

Fig. 5 zeigt die Endform 29 im Längsschnitt, wobei in der linken Hälfte die Situation in der Anfangsphase des Blaszyklus nach Fig. 1f und in der rechten Hälfte die Situation in der Endphase des Blaszyklus nach Fig. 1h dargestellt ist. Die Endform 29 weist die zwei in radialer Richtung verschiebbaren symmetrischen Endformhälften 31 und 33 und den Bodenteil 35 auf, welche Teile den Formhohlraum 36 einschliessen und mit Kühlkanälen 92, 93 bzw. 94 versehen sind. Die beiden Halsformhälften 17 und 19 der Halsform 15 sind mit der Oberseite der beiden Endformhälften 31 und 33 verriegelt. An der Führungsbüchse 21 ist ein Blaskopf 96 angeordnet. Der Blaskopf 96 enthält eine Luftzufuhrkammer 95, die über die Führungsbüchse 21 mit dem Formhohlraum 36 bzw. dem Innern des Külbels B in Verbindung steht und die mit einer Öffnung 97 für die Zufuhr von Blasluft versehen ist. Der Blaskopf enthält weiterhin ein Rückschlagventil 99, das zwischen der Luftzufuhrkammer 95 und einer Zuführungsleitung 101 vorgesehen ist.

In der ersten Blasphase, wie obenstehend bereits im Zusammenhang mit Fig. 1g beschrieben, wird Luft mit geringem Druck und in einem ununterbrochenen Strom durch die Öffnung 97 und die Luftzufuhrkammer 95 zugeführt, wobei der Bodenteil 35 aus der in der linken Hälfte dargestellten Position mit konstanter Geschwindigkeit aufwärts bewegt wird, bis dieser Teil die Unterseite der beiden Endformhälften 31 und 33 berührt und der Formhohlraum 36 unten abgeschlossen ist. Während der nachfolgenden zweiten Blasphase, die obenstehend in Zusammenhang mit Fig. 1h bereits beschrieben wurde, und wobei die rechte Hälfte der Fig. 5 die Endphase zeigt, wird die erforderliche Blasluft mit einem höheren Druck durch die Zuführungsleitung 101 und das Rückschlagventil 99 zugeführt.

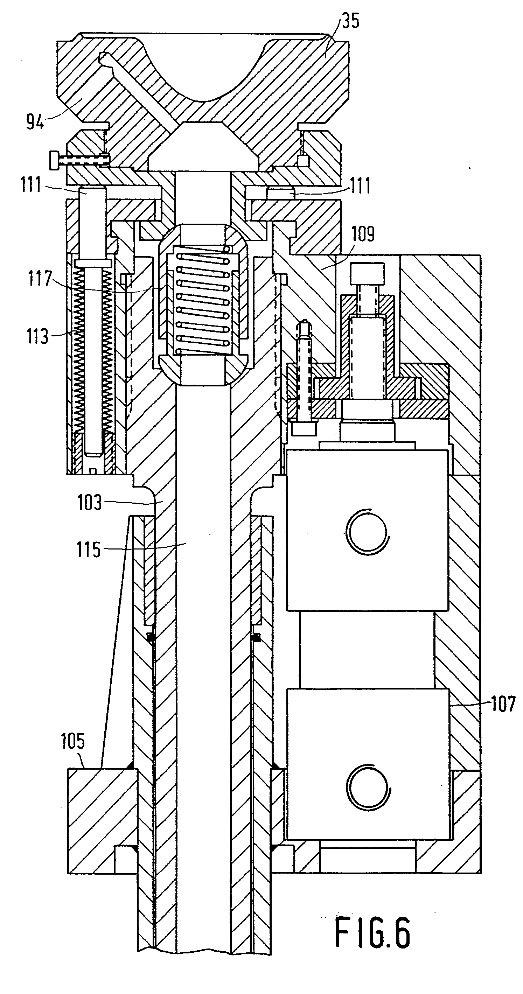

Fig. 6 zeigt im Längsschnitt den Bodenteil 35, der von einer Stange 103 getragen wird, die in einem Rahmen 105 verschiebbar ist. Durch eine pneumatische Einheit 107 und über einen Schiebeblock 109 ist der Bodenteil 35 in der Höhenrichtung verschiebbar. Dadurch, dass der Bodenteil 35 auf Stiften 111 ruht, die unter dem Einfluss von Federn 113 stehen, wird eine federnde nicht starre Unterstützung des Bodenteils erhalten. Durch die federnde Unterstützung des Bodenteils 35 können Positionierungsfehler der Endform 29 einerseits und des Bodenteils 35 andererseits in axialer und radialer Richtung sowie Winkelfehler ausgeglichen werden. Die Kühlkanäle 94 werden mit Kühlluft versehen und zwar über eine Kühlluftleitung 115 in der Stange 103, welche Leitung durch eine federnde Kupplung 117 mit den Kühlkanälen 94 in dem Bodenteil in Verbindung stehen.

Die Erfindung ist an Hand eines Ausführungsbeispiels erläutert worden, das sich auf die Herstellung eines hohlen Glasgegenstandes mit einer rotationssymmetrischen Form bezieht. Die Erfindung eignet sich jedoch im allgemeinen für die Herstellung von Gegenständen mit grossen und schroffen Unterschieden in den Querabmessungen und insbesondere für die Herstellung von Erzeugnissen mit einem engen Hals und zwar auch von Erzeugnissen, die keine rotationssymmetrische Geometrie aufweisen.

**Patentansprüche**

1. Verfahren zum Herstellen hohler Glasgegenstände (E) nach dem Press-Blasverfahren, wobei ein Glasposten (A) in einer Vorform (1) zu einem länglichen Külbel (B) gepresst wird, daraufhin das Külbel aus der Vorform entfernt und freihängend an dem offenen Halsteil (C) einer thermischen Zwischenbehandlung und einer zwischenzeitlichen Blasbearbeitung ausgesetzt wird, wonach das Külbel in einer Endform (29) zu dem gewünschten hohlen Glasgegenstand ausgeblasen wird, wobei das Külbel nach dem Entfernen aus der Vorform am Bodenteil einer Stauchbearbeitung ausgesetzt wird und wobei in dem letzten Endes erhaltenen hohlen Glasgegenstand eine bestimmte Wandstärkeverteilung erhalten wird, dadurch gekennzeichnet, dass das Külbel (B) in der Vorform (1) gekühlt, durch die thermische Zwischenbehandlung am unteren Teil aufgewärmt und am oberen Teil abgekühlt wird und die Stauchbearbeitung am Bodenteil des Külbels (B) während des Ausblasens erfolgt, derart, dass in dem Külbel (B) eine Temperaturverteilung herbeigeführt wird mit einer von dem Halsteil zu dem Bodenteil zunehmenden Temperatur und dass in dem ausgeblasenen hohlen Glasgegenstand (E) eine Wandstärkeverteilung mit einer Wandstärke am Wandteil mit der grössten Querabmessung erhalten wird, die grösser ist als die minimale Wandstärke des Glasgegenstandes (E).

2. Verfahren nach Anspruch 1, dadurch gekennzeichnet, dass man das Külbel (B) bis zu einer derartigen Länge aushängen lässt, dass sich am oberen Teil des Külbels eine Einschnürung (F) bildet und dass während des Ausblasevorganges des Külbels (B) der aus der unten offenen Endform (29) hängende untere Teil des Külbels durch die Stauchbearbeitung allmählich aufwärts und in die Endform (29) gedrückt wird.

3. Hohler Glasgegenstand (E), hergestellt nach dem Verfahren gemäss Anspruch 1 oder 2, mit einem engen Hals (C), mit starken und schroffen Durchmesserübergängen und mit einem relativ geringen Krümmungsradius an den Übergangsteilen zwischen zwei Wandteilen mit unterschiedlichen Durchmessern, gekennzeichnet durch eine Wandstärke an den Übergangsteilen die grösser ist als die minimale Wandstärke des Glasgegenstandes.

4. Kolben für eine Glühlampe, insbesondere für eine Reflektorlampe, hergestellt nach dem Verfahren gemäss Anspruch 1 oder 2, mit einem ringförmigen sich in radialer Richtung erstreckenden Fenster, das winkelrecht oder nahezu winkelrecht zur Mittellinie des Kolbens steht, gekennzeichnet durch eine Wandstärke an den Übergangsteilen, die grösser ist als die minimale Wandstärke des Kolbens, insbesondere die Wandstärke im Bereich des Fensters grösser ist als die Wandstärke im Bereich des Kolbenbodens.

5. Vorrichtung zum Durchführen des Verfahrens nach Anspruch 1 oder 2 mit einer Halsform (15), die aus zwei symmetrischen in radialer Richtung verschiebbaren Halsformhälften (17, 19) besteht, einer Vorform (1), die mit einem Presskolben (13) zusammenwirkt und einer Endform (29), die aus zwei symmetrischen Endformhälften (31, 33) und einem scheibenförmigen Bodenteil (35) besteht, wobei die Vorrichtung weiterhin eine an die Halsform anschliessbare Blaseinrichtung (27, 37), eine Einrichtung (75) zur Durchführung einer thermischen Zwischenbehandlung sowie eine unter die Endform bringbare Staucheinrichtung aufweist, dadurch gekennzeichnet, dass die Vorform (1) eine Formhalterung (7), einen Einsatz (3) mit einem Presshohlraum (5) sowie einen Formboden (9) aufweist, wobei am Aussenumfang des Einsatzes (3) sich in axialer Richtung erstreckende Kühlrippen (57) vorgesehen sind, die zusammen mit der Innenwand der Formhalterung (7) Kühlkanäle (11) einschliessen, wobei die Kühlrippen (57) wenigstens über einen Teil ihrer Länge eine in Richtung des Formbodens abnehmende Höhe (H) aufweisen, wobei die Einrichtung zur Durchführung einer thermischen Zwischenbehandlung durch einen thermischen Kopf (75) gebildet ist, der einen Kühlring (23) und einen unter diesem Kühlring positionierten Brenner (25) aufweist.

6. Vorrichtung nach Anspruch 5, dadurch gekennzeichnet, dass der Einsatz (3) und die Formhalterung (7) aus unterschiedlichen Werkstoffen hergestellt sind, wobei der Werkstoff des Einsatzes (3) einen höheren Ausdehnungskoeffizienten aufweist als der Werkstoff der Formhalterung (7).

7. Vorrichtung nach Anspruch 5 oder 6, dadurch gekennzeichnet, dass der thermische Kopf in vertikaler Richtung bewegbar ist und der Kühlring und der Brenner relativ zueinander einstellbar sind.

8. Vorrichtung nach Anspruch 5, 6 oder 7, dadurch gekennzeichnet, dass die Stauchvorrichtung durch den scheibenförmigen Bodenteil (35) der Endform (29) gebildet ist, welcher bei in Umfangsrichtung geschlossener Endform (29), wobei die beiden Endformhälften (31, 33) aneinander liegen, unabhängig von den beiden Endformhälften (31, 33) in der Höhenrichtung verschiebbar ist.

## Claims

1. A method of manufacturing hollow glass objects (E) by means of the press-and-blow process, in which a glass gob (A) is moulded in a preform mould (1) to an elongate parison (B), the parison is then removed from the preform mould and is subjected, whilst having freely at the open neck part (C), to a thermal intermediate treatment and to an intermediate blowing operation and the parison is subsequently blown out in a finish mould (29) to the desired hollow glass object, the parison being subjected, after being removed from the preform mould, at the bottom part to an upsetting operation and a given wall thickness distribution being obtained in the ultimately obtained hollow glass object, characterized in that the parison (B) in the preform mould (1) is cooled, is heated up at the lower part and is cooled at the upper part by the thermal intermediate treatment and the upsetting operation at the bottom part of the parison (B) is effected during blowing-out in such a manner that in the parison (B) a temperature distribution is obtained with a temperature increasing from the neck part to the bottom part and that in the blown hollow glass object (E) a wall thickness distribution is obtained with a wall thickness at the wall part having the largest transverse dimension which is larger than the minimum wall thickness of the glass object (E).

2. A method as claimed in Claim 1, characterized in that the parison (B) is caused to sag to such a length that a part of reduced thickness (F) is formed at the upper part of the parison and that during the step of blowing out the parison (B) the lower part of the parison hanging from the finish mould (29) open on the lower side is pushed by the upsetting operation gradually upwards and into the finish mould (29).

3. A hollow glass object (E) manufactured by means of the method claimed in Claim 1 or 2 having a narrow neck (C) with strong and abrupt diameter transitions and with a comparatively small radius of curvature at the transitional parts between two wall portions having different diameters, characterized by a wall thickness at the transitional parts which is larger than the minimum wall thickness of the glass object.

4. A bulb for an incandescent lamp, more particularly for a reflector lamp, manufactured by means of the method claimed in Claim 1 or 2 having an annular radially extending window, which is arranged at right angles or substantially at right angles to the centre line of the bulb, characterized by a wall thickness at the transitional parts which is larger than the minimum wall thickness of the bulb, more particularly the wall thickness at the area of the window is larger than the wall thickness at the area of the bulb bottom.

5. An apparatus for carrying out the method claimed in Claim 1 or 2, comprising a neck mould

(15), which consists of two symmetrical radially displaceable neck mould halves (17, 19), a preform mould (1), which cooperates with a moulding die (13), and a finish mould (29), which consists of two symmetrical finish mould halves (31, 33) and a disk-shaped bottom part (35), the apparatus further comprising a blowing device (27, 37) that can be connected to the neck mould, a device (75) for carrying out a thermal intermediate treatment and an upsetting device that can be carried under the finish mould, characterized in that the preform mould (1) comprises a mould holder (7), an insert (3) having a moulding cavity (5) and a mould bottom (9), axially extending cooling fins (57) being provided at the outer circumference of the insert (3), which cooling fins (57) enclose together with the inner wall of the mould holder (7) cooling ducts (11) and have at least over part of their length a height (H) decreasing towards the mould bottom, while the device for carrying out a thermal intermediate treatment is constituted by a thermal head (75), which comprises a cooling ring (23) and a burner (25) positioned below said cooling ring.

6. An apparatus as claimed in Claim 5, characterized in that the insert (3) and the mould holder (7) are made of different materials, the material of the insert (3) having a higher expansion coefficient than the material of the mould holder (7).

7. An apparatus as claimed in Claim 5 or 6, characterized in that the thermal head is movable in vertical direction and the cooling ring and the burner are adjustable relative to each other.

8. An apparatus as claimed in Claim 5, 6 or 7, characterized in that the upsetting device is constituted by the disk-shaped bottom part (35) of the finish mould (29), which, when the finish mould (29) is closed in the circumferential direction, while the two finish mould halves (31, 33) engage each other, is displaceable in the direction of height independently of the two finish mould halves (31, 33).

**Revendications**

1. Procédé de fabrication d'objets creux en verre (E) par le procédé pressé-soufflé, suivant lequel une paraison de verre (A) est transformée par pressage dans un moule ébaucheur (1) en une ébauche longitudinale (B), ensuite l'ébauche est enlevée du moule ébaucheur et, suspendue librement à la partie de col ouverte (C), est soumise à un traitement intermédiaire thermique et à une opération intermédiaire de soufflage, après quoi l'ébauche est soufflée dans un moule finisseur (29) pour l'obtention de l'objet creux en verre désiré, l'ébauche étant soumise à une opération de refoulement dans sa partie de fond après son enlèvement du moule ébaucheur et une répartition déterminée d'épaisseur de paroi étant obtenue dans l'objet creux en verre finalement obtenu, caractérisé en ce que l'ébauche (B) est refroidie dans le moule ébaucheur (1), en ce que, par le traitement intermédiaire thermique, elle, est chauffée dans sa partie inférieure et refroidie dans sa partie supérieure et en ce que l'opération de refoulement au niveau du fond de l'ébauche (B) est effectuée pendant le soufflage de manière à établir dans l'ébauche (B) une répartition de température telle que la température augmente à partir du col vers le fond et à établir dans l'objet creux soufflé en verre (E) une répartition d'épaisseur de paroi telle que, dans la partie de paroi ayant la plus grande dimension transversale, est obtenue une épaisseur de paroi supérieure à l'épaisseur de paroi minimale de l'objet en verre (E).

2. Procédé selon la revendication 1, caractérisé en ce qu'on laisse affaisser l'ébauche (B) jusqu'à une longueur telle qu'un étranglement (F) est formé dans la partie supérieure de l'ébauche et en ce qu'au cours de l'opération de soufflage de l'ébauche (B), la partie inférieure de l'ébauche, se trouvant suspendue au-dessous du moule finisseur ouvert (29), est pressée progressivement vers le haut et ainsi introduite dans le moule finisseur (29) sous l'effet de l'opération de refoulement.

3. Objet creux en verre (E) fabriqué par la mise en œuvre du procédé selon la revendication 1 ou 2 et présentant un col étroit (C) et de fortes variations brusques du diamètre et ayant un rayon de courbure relativement petit dans les parties transitoires entre deux parties de paroi de diamètres différents, caractérisé en ce que son épaisseur de paroi à l'endroit des parties transitoires est supérieure à l'épaisseur de paroi minimale de l'objet de verre.

4. Ampoule destinée à une lampe à incandescence, notamment à une lampe à réflecteur, et fabriquée par la mise en œuvre du procédé selon la revendication 1 ou 2, ampoule qui présente une fenêtre annulaire s'étendant dans le sens radial et perpendiculairement ou à peu près perpendiculairement à l'axe de l'ampoule, caractérisée en ce que l'épaisseur de paroi dans les parties transitoires est supérieure à l'épaisseur de paroi minimale de l'ampoule, notamment l'épaisseur de paroi à l'endroit de la fenêtre est supérieure à l'épaisseur de paroi à l'endroit du fond de l'ampoule.

5. Dispositif de mise en œuvre du procédé selon la revendication 1 ou 2, comportant un moule de bague (15) constitué de deux moitiés symétriques (17, 19) pouvant être déplacées dans le sens radial, un moule ébaucheur (1) coopérant avec un poinçon ébaucheur (13), et un moule finisseur (29) constitué de deux moitiés symétriques (31, 33) et d'une partie de fond en forme de disque (35), dispositif qui comporte en outre un dispositif de soufflage (27, 37) pouvant être raccordé au moule de bague, un dispositif (75) pour effectuer un traitement intermédiaire thermique ainsi qu'un dispositif de refoulement pouvant être amené au-dessous du moule finisseur, caractérisé en ce que le moule ébaucheur (1) comporte un support porte-moule (7), un élément d'insertion (3) présentant une cavité de pressage (5) et un fond, (9) alors qu'à la périphérie extérieure de l'élément d'insertion (3), sont prévues des ailettes de refroidissement (57) s'étendant dans le sens axial et qui, conjointement avec la paroi intérieure du support porte-moule (7), enferment des canaux de refroidissement (11), que les ailettes de refroidissement (57) présentent au moins sur une partie de leur longueur une hauteur (H) allant en diminuant vers le fond du moule et que, pour l'accomplissement d'un traitement intermédiaire thermique, le dispositif est formé par une tête thermique (75) comportant une bague de refroidissement (23) et un brûleur (25) positionné au-dessous de cette bague de refroidissement.

6. Dispositif selon la revendication 5, caractérisé en ce que l'élément d'insertion (3) et le support porte-moule (7) sont en matériaux différents, le matériau de l'élément d'insertion (3) présentant un coefficient de dilatation plus élevé que le matériau du support porte-moule (7).

7. Dispositif selon la revendication 5 ou 6, caractérisé en ce que la tête thermique peut être déplacée dans le sens vertical et en ce que la bague de refroidissement et le brûleur peuvent être réglés entre eux.

8. Dispositif selon la revendication 5, 6 ou 7, caractérisé en ce que le dispositif de refoulement est formé par la partie de fond en forme de disque (35) du moule finisseur (29), partie de fond qui, le moule finisseur (29) étant fermé dans le sens de la périphérie et les deux moitiés de moule finisseur (31, 33) étant donc appliquées l'une contre l'autre, peut être déplacée dans le sens de la hauteur indépendamment des deux moitiés de moule finis-seur (31, 33).

FIG.1a

FIG.1b

FIG.1c

FIG.1d

FIG.1e

FIG.1f   FIG.1g   FIG.1h

FIG.1i   FIG.1j

EP 0 139 339 B1

FIG.2

FIG.3

FIG.4

FIG.5

FIG.6